# EUROPÄISCHE PATENTSCHRIFT

(11) **EP 1 098 097 B1**
(45) Veröffentlichungstag und Bekanntmachung des Hinweises auf die Patenterteilung: **09.06.2004**
(21) Anmeldenummer: 00123607.4
(22) Anmeldetag: 28.10.2000
(51) Int. Cl.: F16C 23/10

(54) **Lagerbuchse**
Bearing bush
Bague de palier

(30) Priorität: 03.11.1999 DE 19952869
(43) Veröffentlichungstag der Anmeldung: 09.05.2001
(73) Patentinhaber: Flender Tübingen GmbH, 72072 Tübingen (DE)
(72) Erfinder: Nienhaus, Christian, 46397 Bocholt (DE)
(74) Vertreter: Radünz, Ingo, Dipl.-Ing.

(56) Entgegenhaltungen:
- WO-A-94/17319
- US-A- 3 731 357
- PATENT ABSTRACTS OF JAPAN vol. 007, no. 001 (M-183), 6. Januar 1983 (1983-01-06) & JP 57 161316 A (HITACHI ZOSEN KK), 4. Oktober 1982 (1982-10-04)

## Beschreibung

Die Erfindung betrifft eine Lagerbuchse und ein Maschinenteil zur Aufnahme der Lagerbuchse mit den Merkmalen des Oberbegriffes des Anspruchs 1.

Derartige Lagerbuchsen werden im Maschinenbau eingesetzt, um den gegenseitigen Abstand zweier Bauteile, z. B. zweier Wellen in einem bestimmten Bereich verändern zu können. Die gleichmäßig über den Umfang des Flansches angeordneten Bohrungen zur Aufnahme der Befestigungsschrauben gestatten es, die Lagerbuchse mit Hilfe der Befestigungsschrauben in unterschiedlichen Einstellpositionen an einem Maschinenteil zu befestigen.

Bei den bekannten Lagerbuchsen ist die Exzentrizität von Innenbohrung und Mantelfläche symmetrisch zu den identisch (gleichartig) angeordneten Bohrbildern der N Bohrungen in dem Flansch und dem Maschinenteil ausgebildet, das heißt, der Mittelpunkt der Innenbohrung liegt auf einer der beiden senkrecht zueinander stehenden Symmetrieachsen der Mantelfläche. Bei einer solchen symmetrischen Ausbildung ist die Anzahl der möglichen Einstellpunkte der Lagerbuchse gegenüber dem Maschinenteil auf höchstens der nächst größeren ganzen Zahl der Hälfte N/2 der vorhandenen Bohrungen N begrenzt. Eine feinere Abstufung der Einstellung der Exzentrizität ist nur durch eine Erhöhung der Anzahl der Bohrungen zur Aufnahme der Befestigungsschrauben möglich. Diese Maßnahme erhöht die Herstellungskosten.

Der Erfindung liegt die Aufgabe zugrunde, die gattungsgemäße Lagerbuchse und das gattungsgemäße Maschinenteil zur Aufnahme der Lagerbuchse derart zu ändern, daß bei gleicher Anzahl N der Bohrungen in dem Flansch und dem aufnehmenden Maschinenteil eine feinere Einstellung der Projektion der Exzentrizität auf eine Bezugsebene durch eine Vergrößerung der bekannten N/2 Positionen auf N Positionen erreicht werden kann.

Die Aufgabe wird erfindungsgemäß bei einer gattungsgemäßen Lagerbuchse durch die kennzeichnenden Merkmale des Anspruches 1 gelöst. Vorteilhafte Ausgestaltung der Erfindung sind Gegenstand der Unteransprüche.

Die Erfindung und die mit der Erfindung verbundenen Vorteile werden nachfolgend an mehreren in der Zeichnung dargestellten Ausführungsbeispielen erläutert. Es zeigen:
- Fig. 1: eine stirnseitige Ansicht auf eine symmetrische Lagerbuchse nach dem Stand der Technik,
- Fig. 2: einen Schnitt durch die Aufnahme einer Lagerbuchse in einem Maschinenteil nach Fig.1,
- Fig. 3: eine stirnseitige Ansicht auf ein erfindungsgemäß ausgestattetes Bauteil Lagerbuchse,
- Fig. 4: eine stirnseitige Ansicht auf ein Maschinenteil gepaart mit einer bekannten symmetrischen Lagerbuchse,
- Fig. 4a: einen Schnitt durch die Aufnahme einer Lagerbuchse und einem Maschinenteil nach Fig. 4
- Fig. 4b: den Schnitt IV - IV nach Fig. 4a
- Fig. 5: einen Schnitt durch ein Maschinenteil
- Fig. 5a: den Schnitt A - A nach Fig. 5 und,
- Fig. 5b: den Schnitt B - B nach Fig. 5.

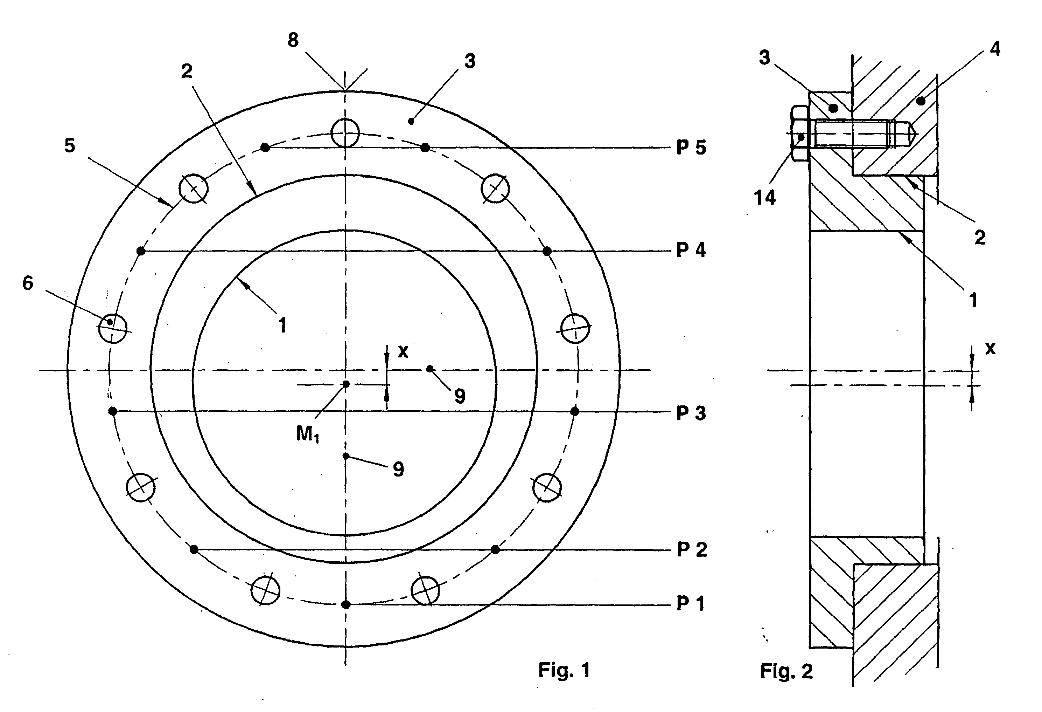

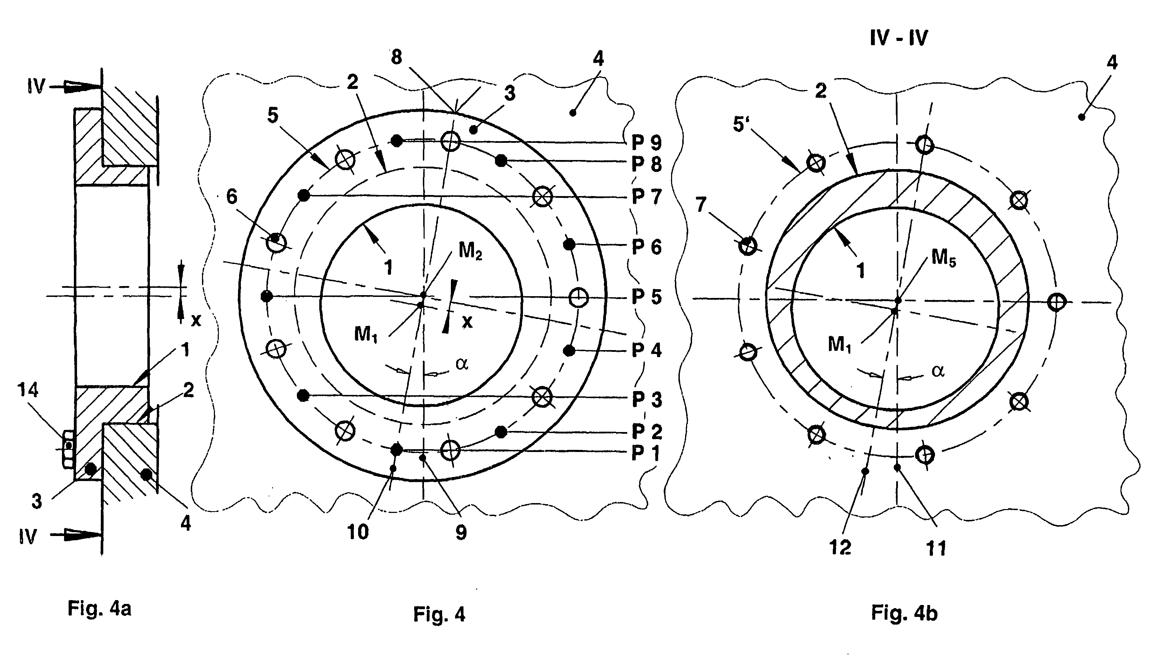

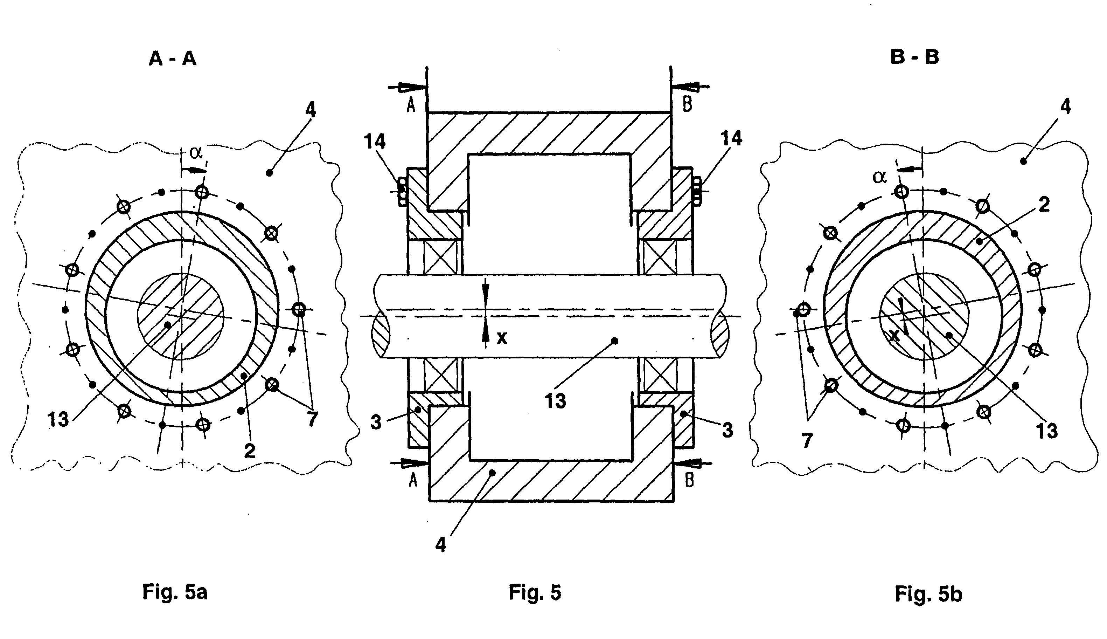

(Die Figuren 4, 4a, 4b, 5, 5a, 5b zeigen Ausbildungen mit einer Lagerbuchse gemäß Figur 1.)

Die dargestellte Lagerbuchse weist eine Innenbohrung 1 zur Aufnahme einer Welle und eine äußere Mantelfläche 2 auf. Die Lagerbuchse ist weiterhin mit einem die Mantelfläche 2 überragenden Flansch 3 versehen, der mit Hilfe von Befestigungsschrauben 14 an einem Maschinenteil 4 montiert wird. Zur Aufnahme der Befestigungsschrauben 14 ist der Flansch 3 mit Bohrungen 6 versehen, die auf einem zu der Mantelfläche 2 konzentrischen Kreis 5 angeordnet sind. Auf einem gleich großen Kreis 5' in Fig. 4b sind in dem Maschinenteil 4 als Gewindebohrungen ausgebildete Bohrungen 7 angebracht, in die die Befestigungsschrauben 14 eingreifen. Eine beliebige aber dann immer an der gleichen Stelle unverändert wiederkehrende Kennzeichnung 8 an der Lagerbuchse hilft bei Montage den Fehler der Achsparallelitätsabweichung zu unterbinden.

Die Innenbohrung 1 der Lagerbuchse ist exzentrisch zu der Mantelfläche 2 angeordnet. Diese Ausbildung der Lagerbuchse dient dazu, den Abstand zweier einander stirnseitig gegenüber liegenden Wellen in einem gewissen Bereich in der Weise zu ändern, daß die Achsen der Wellen exakt koaxial zueinander ausgerichtet sind. Der Bereich der Verstellbarkeit ist von der Größe der Exzentrizität x abhängig und beträgt maximal den doppelten Wert 2x des Mittelpunktabstandes der durch die Innenbohrung 1 und die Mantelfläche 2 vorgegebenen Kreise. Um eine feinere Stufung zu erreichen, sind hier auf dem Kreis 5 beispielhaft neun Bohrungen 6 für die Aufnahme der Befestigungsschrauben 14 gleichmäßig verteilt.

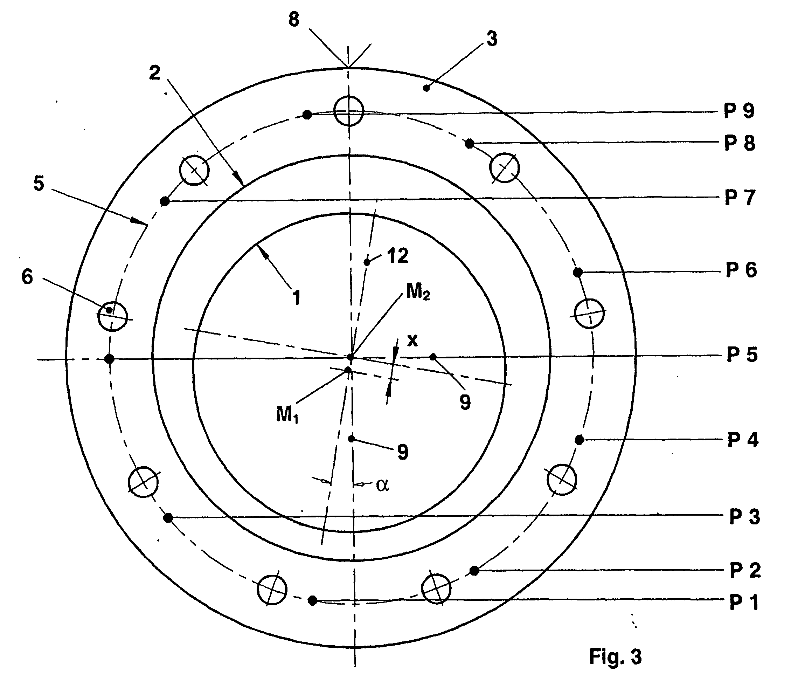

Bei der in der Fig. 1 dargestellten Lagerbuchse ist die Exzentrizität von Innenbohrung 1 zu Mantelfläche 2 symmetrisch zu dem Bohrbild (Anordnung) der Bohrungen 6 in dem Flansch 3 ausgebildet. Genau das gleiche Bohrbild findet sich in dem Maschinenteil 4 in Fig. 2 wieder. Hierbei liegt der Mittelpunkt M₁ der Innenbohrung 1 in einer der Symmetrieachsen 9 der Mantelfläche 2. Hieraus ergeben sich bei neun Bohrungen 6 fünf verschiedene Einstellpunkte P1 bis P5, in denen die Lagerbuchse an dem Maschinenteil 4 befestigt werden kann. Um eine feinere Abstufung durch eine größere Anzahl von Einstellpunkten zu erhalten, müßte bei einer symmetrischen Ausbildung der Exzentrizität die Anzahl der Bohrungen 6 erhöht werden.

Die in der Fig. 3 dargestellte erfindungsgemäße Lagerbuchse stimmt mit der Lagerbuchse nach Fig. 1 in der Anzahl und der Anordnung der Bohrungen 6 überein. Unterschiedlich ist die Ausbildung der Exzentrizität von Innenbohrung 1 und Mantelfläche 2. Die Exzentrizität ist bei der Lagerbuchse nach Fig. 3 asymmetrisch und in diesem Fall konstruktiv am Bauteil Lagerbuchse verwirklicht. Bei dieser asymmetrischen Ausbildung der Exzentrizität liegt der Mittelpunkt M₁ der Innenbohrung 1 außerhalb der beiden zueinander senkrechten Symmetrieachsen 9 der Mantelfläche 2. Der Mittelpunkt der Innenbohrung 1 und der Mittelpunkt der Mantelfläche 2 liegen dabei auf einer Geraden, die mit einer der Symmetrieachsen der Mantelfläche 2 einen beliebigen Winkel α einschließt. In Serienanwendungen hat sich die Vorgabe des Winkels α durch ein Viertel des Lochabstandes zweier benachbarter Bohrungen 6 als vorteilhaft erwiesen und ermöglicht eine optimale Stufung der Abstände der Einstellpunkte zueinander. Durch die Wahl eines anderen beliebigen Winkels α kann auf die Verteilung der zueinander abgestuften Abstände zwischen benachbarten Punkten P(m) und P(m+1) individuell Einfluß genommen werden.

Die in Fig. 3 durch die Mittelpunkte M₁, M₂ von Innenbohrung 1 und Mantelfläche 2 verlaufende Gerade 12 schneidet den Kreis 5 in einem Abstand von einer Bohrung 6, der einem Viertel des Lochabstandes zweier benachbarter Bohrungen 6 entspricht. Wie sich aus der Fig. 3 entnehmen läßt, erhöht sich durch diese asymmetrische Ausbildung der Exzentrizität bei gleicher Anzahl der Bohrungen 6 die Anzahl der Einstellpositionen P1 bis P9 der Lagerbuchse von fünf gemäß Fig. 1 auf neun gemäß Fig. 3. Die Einstellpositionen sind somit dichter gestuft und ermöglichen dadurch eine feinere Einstellung der Exzentrizität. Die Herstellkosten werden durch diese Maßnahme an einem Einzelteil nicht erhöht. Die Lagerbuchse nach Fig. 3 integriert die Exzentrizität unter Beibehaltung des Bohrbildes im Flansch 3 und dem Maschinenteil 4 in ein Bauteil. Vorteilhaft läßt sich dieses Bauteil nachträglich in schon körperlich vorhandenen Maschinen einsetzen.

Bei der in der Fig. 4 bis 4b gezeigten Ausführungsform der Erfindung wird eine Lagerbuchse bekannter Art mit einer symmetrischen Exzentrizität verwendet, wie sie in der Fig. 1 dargestellt ist. Die Symmetrieachse 10 der Lagerbuchse ist gemäß Fig. 4 um den Winkel α gegenüber der Vertikalen gedreht. Man erkennt, daß - wie in Fig. 1 dargestellt - die Mittelpunkte M₁, M₂ von Innenbohrung 1 und Mantelfläche 2 auf der Symmetrieachse 10 der Lagerbuchse liegen. Die Asymmetrie ist in das Maschinenteil 4 verlegt. Wie aus der Fig. 4b zu erkennen ist, liegen der Mittelpunkt M₁ der Innenbohrung der Lagerbuchse und der Mittelpunkt M₅ des Kreises 5' auf einer Geraden 12, die einen Winkel α mit der mit der entscheidenden vertikalen Symmetrieachse 11 bzw. 9 des ursprünglichen Bohrbildes nach Fig. 1 mit dem Kreis 5 einschließt. Auch bei dieser Ausführungsform ergeben bei neun Bohrungen 7 neun Einstellpositionen P1, P2, P3, P4, P5, P6, P7, P8, P9.

Im Vergleich zu der Ausführungsform der Erfindung gemäß Fig. 3 lassen sich hier bei neu zu bearbeitenden Bauteilen zusätzlich fertigungstechnische und logistische Vorteile erschließen. Die spiegelsymmetrische Anordnung der Bohrbilder im Maschinenteil 4 in den Fig. 4 bis 4b führt im Vergleich zur Gestaltung der Lagerbuchse nach Fig. 3 zu keiner Erhöhung der Bearbeitungs- und Rüstzeit. Andererseits ist das Bauteil Lagerbuchse an beiden Lagerpunkten gleich. Die damit verbundene Erhöhung der Losgrößen führt zu einer rationelleren Fertigung.

Gemäß Fig. 5 ist durch ein Maschinenteil 4, das beispielsweise das Gehäuse eines Getriebes ist, eine ein nicht gezeigtes Zahnrad tragende Welle 13 hindurchgeführt. Die Welle 13 ist in einander gegenüber liegenden Wänden des Maschinenteiles 4 jeweils in einer Lagerbuchse gehalten. Diese Lagerbuchsen sind gemäß Fig. 1 mit einer symmetrischen Exzentrizität versehen und über eine Aufnahme mit einer Asymmetrie gemäß den Fig. 4 bis 4b an dem Maschinenteil 4 befestigt. Die Lagerbuchsen sind von außen an dem Maschinenteil 4 montiert. Dazu sind die Bohrungen 7 zur Aufnahme der Befestigungsschrauben 14 spiegelbildlich in dem Maschinenteil 4 angebracht. Für beide Seiten können gleiche Lagerbuchsen eingesetzt werden, wobei bei der gezeigten Montage von außen die Lagerbuchse lediglich auf der einen Seite um den Winkel α nach links und auf der anderen Seite um diesen Winkel α nach rechts zu drehen ist. Die Fig. 5 bis 5b zeigen, daß Abweichungen von der Achsparallelität, die sich aus Achsneigungs- und Achsschränkungsabweichungen, also aus Abweichungen in der Vertikalen und der Horizontalen, zusammensetzen, durch die gewählte asymmetrische Exzentrizität vermeiden lassen. Das gilt sowohl für den in den Fig. 4 bis 4b dargestellten Fall einer asymmetrischen Exzentrizität im Maschinenteil 4 als auch für die asymmetrische Exzentrizität in der Lagerbuchse gemäß Fig. 3.

## Patentansprüche

1. Lagerbuchse, die an einem Maschinenteil (4) befestigbar ist, wobei die Lagerbuchse eine äußere Mantelfläche (2), eine zu der Mantelfläche (2) exzentrisch angeordnete Innenbohrung (1) sowie einen die Mantelfläche überragenden Flansch (3) aufweist, in dem auf einem zur Mantelfläche (2) konzentrischen Kreis (5) Bohrungen (6) zur Aufnahme von Befestigungsschrauben (14) angeordnet sind, die mit Bohrungen (7) korrespondieren, die auf einem gleich großen Kreis (5') in dem Maschinenteil (4) angebracht sind, und wobei die Mantelfläche (2) und der mit den Bohrungen (6) versehene Flansch (3) mindestens eine Symmetrieebene (9) une eine dazu senkrecht stehende Mittelebene aufweist, **dadurch gekennzeichnet, daß** der Mittelpunkt (M₁) der Innenbohrung (1) außerhalb der mindestens einen Symmetrieachse (9) und der dazu senkrecht stehenden Mittelachse der Mantelfläche (2) liegt.

2. Lagerbuchse nach Anspruch 1, **dadurch gekennzeichnet, daß** der Mittelpunkt (M₁) der Innenbohrung (1) und der Mittelpunkt (M₂) der Mantelfläche (2) auf einer Geraden (12) liegen, die mit einer der beiden senkrecht zueinander stehenden Symmetrieebenen der Mantelfläche (2) einen Winkel α einschließt.

3. Lagerbuchse nach Anspruch 2, **dadurch gekennzeichnet, daß** die Größe des Winkels α durch die angestrebte Abstufung der Einstellpositionen zur Befestigung der Lagebuchse an dem Maschinenteil (4) bestimmt ist, und daß die optimale Größe durch ein Viertel des Abstandes zweier benachbarter Bohrungen (6) im Flansch (3) gegeben ist.

## Claims

1. Bearing bush, which is fastenable to a machine part (4), wherein the bearing bush comprises an outer circumferential surface (2), an inner bore (1) arranged eccentrically relative to the circumferential surface (2), and a flange (3) which projects beyond the circumferential surface and in which there are arranged on a circle (5) concentric with the circumferential surface (2) bores (6) for reception of fastening screws (14) corresponding with bores (7) which are formed on a circle (5') of the same size in the machine part (4), and wherein the circumferential surface (2) and the flange (3) provided with the bores (6) have at least one plane (9) of symmetry and a centre plane perpendicular thereto, **characterised in that** the centre point (M₁) of the inner bore (1) lies outside the at least one axis (9) of symmetry and the centre axis perpendicular thereto of the circumferential surface (2).

2. Bearing bush according to claim 1, **characterised in that** the centre point (M₁) of the inner bore (1) and the centre point (M₂) of the circumferential surface (2) lie on a straight line (12) which includes an angle α with one of the two mutually perpendicular planes of symmetry of the circumferential surface (2).

3. Bearing bush according to claim 2, **characterised in that** the size of the angle α is determined by the desired stepping of the adjustment positions for fastening the bearing bush to the machine part (4) and that the optimum size is given by a quarter of the spacing between two adjacent bores (6) in the flange (3).

## Revendications

1. Coussinet pouvant être fixé sur une pièce de machine (4), le coussinet présentant une surface d'enveloppe extérieure (2), un alésage intérieur (1) disposé excentriquement par rapport à la surface d'enveloppe (2), ainsi qu'une bride (3) dépassant de la surface d'enveloppe, dans laquelle sont disposés des trous (6) sur un cercle (5) concentrique à la surface d'enveloppe (2) pour recevoir des vis de fixation (14), qui sont en correspondance avec des trous (7) aménagés sur un cercle (5') de taille égale dans la pièce de machine (4), et la surface d'enveloppe (2) et la bride (3) munie des trous (6) présentant au moins un plan de symétrie (9) et un plan médian perpendiculaire à ce dernier, **caractérisé en ce que** le centre (M₁) de l'alésage intérieur (1) se situe à l'extérieur du au moins un axe de symétrie (9) et de l'axe médian perpendiculaire à ce dernier de la surface d'enveloppe (2).

2. Coussinet suivant la revendication 1, **caractérisé en ce que** le centre (M₁) de l'alésage intérieur (1) et le centre (M₂) de la surface d'enveloppe (2) se situent sur une droite (12) qui forme un angle α avec l'un des deux plans de symétrie perpendiculaires entre eux de la surface d'enveloppe (2).

3. Coussinet suivant la revendication 2, **caractérisé en ce que** la valeur de l'angle α est définie par la gradation recherchée des positions de réglage pour fixer le coussinet sur la pièce de machine (4), et que la valeur optimale est donnée par un quart de l'écartement de deux trous adjacents (6) dans la bride (3).
